# FASCICULE DE BREVET EUROPEEN

(11) **EP 2 388 481 B1**
(45) Date de publication et mention de la délivrance du brevet: **16.01.2013**
(21) Numéro de dépôt: 11166913.1
(22) Date de dépôt: 20.05.2011
(51) Int. Cl.: F04B 17/04, H02K 33/02, H02K 33/16

(54) **Pompe electromagnétique à piston oscillant**
Elektromagnetische Schwingankerpumpe
Oscillating piston electromagnetic pump

(30) Priorité: 21.05.2010 FR 1054000
(43) Date de publication de la demande: 23.11.2011
(73) Titulaire: Sauermann Industrie S.A., 77173 Chevry Cossigny (FR)
(72) Inventeur: Sardet, François, 77380 Combs-la-Ville (FR)
(74) Mandataire: Saint-Marc-Etienne, Christophe Andréas

(56) Documents cités:
- FR-A- 1 358 832
- FR-A- 1 554 354
- FR-A- 1 555 291
- FR-A- 1 583 650
- GB-A- 2 241 287

## Description

### 1. Domaine technique de l'invention

L'invention concerne les dispositifs de pompage pour le relevage de condensats, notamment dans des systèmes de climatisation, des systèmes de réfrigération, des systèmes de ventilation ou des systèmes de chauffage.

L'invention concerne plus particulièrement un dispositif électromagnétique de pompage de fluide pour le relevage de condensats, comprenant un piston magnétique oscillant sous l'effet d'un champ électromagnétique.

### 2. Arrière-plan technologique

Dans tout le texte, un organe mécanique sera dit magnétique si le matériau qui le constitue a une perméabilité magnétique relative supérieure à 1. De tels matériaux magnétiques sont par exemple les matériaux ferromagnétiques (Fer, Nickel, Acier, Cobalt,...).

Un aimant permanent est un organe mécanique qui est magnétisé en permanence et qui génère lui-même un champ magnétique.

Les pompes électromagnétiques à piston magnétique oscillant sont aujourd'hui utilisées dans de nombreuses applications, parmi lesquelles les machines à cafés, les distributeurs automatiques, les centrales de repassage à vapeur, les systèmes d'irrigation, les systèmes de climatisation, l'industrie automobile, etc.

Dans ces différentes applications, il est connu d'utiliser une pompe électromagnétique comprenant :
- un corps tubulaire creux s'étendant le long d'une direction longitudinale,
- un piston magnétique monté mobile longitudinalement à l'intérieur du corps tubulaire creux, le piston étant lui-même creux et traversant longitudinalement,
- une bobine alimentée par un courant alternatif redressé simple alternance formant un électro-aimant,
- une chambre d'aspiration de fluide délimitée par une entrée de fluide dans le corps tubulaire creux et le piston magnétique mobile,
- une chambre d'échappement de fluide délimitée par une sortie d'échappement de fluide du corps tubulaire creux et le piston magnétique mobile,
- un ressort de travail ménagé dans la chambre d'aspiration et s'étendant entre l'entrée de fluide et le piston magnétique mobile,
- des clapets anti-retour montés à l'entrée et à la sortie de la chambre de refoulement.

Une telle pompe permet un pompage de fluide par des déplacements axiaux alternatifs du piston sous l'effet du champ magnétique créé par l'électro-aimant. En effet, suivant le principe physique du flux maximum, le piston magnétique se déplace spontanément sous l'effet d'un champ magnétique de sorte que le flux magnétique qui le traverse soit maximum.

Ainsi, à chaque amplitude de courant dans la bobine, le piston est déplacé contre le ressort de travail, logé dans la chambre d'aspiration. Ce déplacement conduit à augmenter le volume de la chambre de refoulement et à en diminuer la pression, ce qui provoque l'ouverture du clapet anti-retour d'entrée de chambre de refoulement. Le fluide peut alors passer de la chambre d'aspiration à la chambre de refoulement par le piston creux.

Lorsque le courant dans la bobine de l'électro-aimant diminue puis devient nul, la force électromagnétique disparaît et le ressort de travail peut repousser le piston pour l'entraîner en déplacement dans le sens inverse. Ce déplacement crée une augmentation de pression dans la chambre de refoulement, ce qui conduit à la fermeture du clapet anti-retour d'entrée et à l'ouverture du clapet anti-retour de sortie. Le fluide peut alors quitter la chambre de refoulement. En outre, le déplacement du piston conduit à l'augmentation du volume de la chambre d'aspiration, et donc à une diminution de la pression, ce qui conduit à l'aspiration de fluide dans la chambre d'aspiration. La pompe est alors prête à subir un nouveau cycle de courant.

L'un des inconvénients de ces pompes de l'état de la technique réside dans leurs faibles performances hydrauliques -notamment débit et aspiration-.

Un autre inconvénient de ces pompes est qu'elles présentent un faible effort au démarrage, ce qui nuit à leur robustesse globale. En particulier, les pistons de ces pompes ne présentent pas une bonne capacité à se décoller en cas de blocage.

Un autre inconvénient de ces pompes est que le piston doit être calé précisément par rapport à l'entrefer, afin d'avoir des performances hydrauliques stables, ce qui impose l'utilisation de pièces ayant des tolérances très précises.

Un autre inconvénient de ces pompes est qu'elles ne peuvent pas être branchées directement sur le secteur.

### 3. Objectifs de l'invention

Dès lors, l'invention vise à pallier au moins certains des inconvénients des pompes électromagnétiques de l'état de la technique.

L'invention vise à fournir, dans au moins un mode de réalisation, une pompe présentant, à géométrie équivalente, des performances hydrauliques et acoustiques améliorées par rapport aux pompes de l'état de la technique.

L'invention vise aussi à fournir, dans au moins un mode de réalisation, une pompe présentant, à géométrie équivalente, un effort au démarrage supérieur à celui des pompes de l'état de la technique.

L'invention vise aussi à fournir, dans au moins un mode de réalisation, une pompe dont les performances hydrauliques sont moins susceptibles aux tolérances des pièces la constituant.

L'invention vise aussi à fournir, dans au moins un mode de réalisation, une pompe électromagnétique pouvant être directement alimentée par un courant alternatif non redressé.

### 4. Exposé de l'invention

Pour ce faire, l'invention concerne une pompe électromagnétique comprenant :
- un corps tubulaire creux s'étendant le long d'une direction longitudinale,
- un piston monté mobile longitudinalement à l'intérieur du corps tubulaire creux, et comprenant au moins un aimant permanent,
- un solénoïde assemblé autour d'au moins une portion du corps tubulaire creux,
- la pompe comprenant au moins une enveloppe magnétique de guidage des lignes de flux créées par l'aimant agencée autour d'une partie dudit corps tubulaire creux et délimitant un entrefer.

Une telle pompe est notamment décrite dans un document FR 1 583 650, mais l'inventeur a observé que les efficacités électromagnétique et mécanique de cette pompe ne sont pas satisfaisantes. Le préambule de la revendication indépendante 1 est basé sur ledit document.

L'inventeur a résolu ce double problème en concevant une pompe conforme à la revendication 1.

Une pompe selon l'invention permet le pompage de fluide depuis une entrée de fluide située d'un côté du piston vers une sortie de fluide situé de l'autre côté du piston en provoquant des déplacements du piston le long du corps tubulaire creux. Ces déplacements résultent d'une part de la création d'un champ magnétique par l'intermédiaire du solénoïde alimenté en courant et d'autre part du champ magnétique induit par l'aimant permanent du piston.

En outre, une pompe selon l'invention permet une alimentation du solénoïde en courant alternatif non redressé, commandée ou non. En effet, la présence d'un aimant magnétisé longitudinalement dans un sens prédéterminé permet d'interagir avec les changements de sens du flux magnétique créé par le solénoïde et résultant du changement de signe du courant alternatif. Une pompe selon l'invention peut donc être directement branchée sur le secteur électrique public.

De plus, une pompe selon l'invention comprend une enveloppe magnétique formant un entrefer entourant au moins une partie du corps tubulaire creux. Ainsi, l'enveloppe magnétique peut orienter et canaliser le flux magnétique, créé par l'aimant, soit autour du solénoïde, soit directement à l'intérieur de l'enveloppe elle-même suivant la position du piston par rapport à l'entrefer. L'entrefer définit la zone de travail du piston dans le corps tubulaire creux.

La force magnétique exercée sur le piston au repos est supérieure à celle typiquement exercée sur le piston d'une pompe connue à géométrie équivalente, ce qui permet de bénéficier d'un effort au démarrage plus important que sur les pompes de l'art antérieur. En particulier, la mutuelle inductance, du fait de l'entrefer formé par l'enveloppe magnétique, peut soit être nulle, soit être très forte.

Enfin, la bague magnétique dont est munie le piston conforme à l'invention permet d'obtenir un ajustement avec le corps tubulaire creux bien plus précis que celui qui aurait été obtenu avec un aimant dépourvu de bague magnétique. En effet, l'aimant est usuellement obtenu par frittage, et la précision d'un matériau fritté ne peut généralement être inférieure à cinq centièmes de millimètre, alors qu'une bague magnétique réalisée en un matériau métallique massique peut aisément être usinée avec une précision de l'ordre du millième de millimètre. Améliorer la précision de l'ajustement du piston dans le corps tubulaire creux améliore l'étanchéité du piston et donc les performances hydrauliques de pression d'aspiration et de refoulement. Par ailleurs, cela améliore la robustesse de l'ensemble, car les frottements entre le corps tubulaire creux et le piston, lors du fonctionnement de la pompe, sont supportés par la bague magnétique et non par l'aimant, qui est plus fragile que la bague. Les performances générales et la durée de vie s'en trouveront ainsi accrues.

Selon un mode de réalisation particulier, l'aimant permanent est magnétisé longitudinalement. Un tel choix semble *a priori* contraire au bon sens, car il augmente la distance parcourue dans l'air par des lignes de champ magnétique créées par l'aimant au niveau de l'entrefer, ce qui est de nature à altérer les performances d'une telle pompe par rapport à celles qui seraient obtenues en magnétisant l'aimant permanent radialement, c'est-à-dire selon une direction perpendiculaire à l'axe du piston. L'inventeur a toutefois observé que les performances de la pompe sont liées à la force du champ magnétique généré par l'aimant, laquelle force est elle-même liée au volume de l'aimant. Ainsi, un aimant magnétisé radialement devra présenter un diamètre important pour produire un champ magnétique comparable à celui produit par un aimant de plus faible diamètre mais de plus grande longueur et magnétisé longitudinalement.

Avantageusement, le piston comprend au moins deux bagues magnétiques agencées de part et d'autre de l'aimant permanent.

L'agencement d'une bague magnétique à chaque extrémité de l'aimant permanent permet une canalisation des lignes de champ en amont et en aval de l'aimant permanent du piston, ce qui améliore la force électromagnétique résultante.

Avantageusement, l'enveloppe magnétique comprend deux manchons magnétiques montés sur le corps tubulaire creux. Ces manchons permettent d'orienter et de canaliser le flux magnétique, créé par l'aimant, soit autour du solénoïde, soit directement à l'intérieur des manchons suivant la position du piston dans le corps tubulaire.

Selon une variante avantageuse de l'invention, le piston comprend au moins deux aimants permanents magnétisés longitudinalement et de sens opposés, ces deux aimants étant séparés par une portion magnétique.

La portion magnétique sera préférentiellement constituée par une bague magnétique, apte à canaliser les lignes de champ, créées par les aimants, afin de limiter leur passage dans l'air, ce qui améliore la force électromagnétique résultante.

De préférence, un piston conforme à la description qui précède comprend deux bagues magnétiques agencées aux extrémités longitudinales du piston et permettant non seulement d'améliorer encore le guidage des lignes de champ, mais aussi de diminuer les tolérances du diamètre extérieur du piston, conformément à la description qui précède.

Avantageusement, une pompe selon l'invention comprend au moins un premier organe élastique, dit organe de travail, ménagé dans une chambre dite d'aspiration formée par un espace séparant le piston d'une entrée de fluide, et apte à être placé dans au moins une configuration de compression par le piston de sorte que la chambre d'aspiration y présente un premier volume, et dans au moins une deuxième configuration dans laquelle il est détendu et maintient le piston en une position telle que la chambre d'aspiration y présente un deuxième volume, supérieur audit premier volume.

Avantageusement, en variante ou en combinaison, une pompe selon l'invention comprend au moins un deuxième organe élastique, dit organe de choc, ménagé dans une chambre de refoulement formée par un espace séparant le piston d'une sortie de fluide, et apte à être placé dans au moins une première configuration de compression par le piston de sorte que la chambre de refoulement y présente un premier volume, et dans au moins une deuxième configuration dans laquelle il est détendu et maintient le piston en une position telle que la chambre de refoulement y présente un deuxième volume, supérieur audit premier volume.

Les organes de travail et de choc participent à l'amélioration des performances hydrauliques d'une pompe selon ces variantes. En particulier, et dans le cas où le solénoïde est alimenté par un courant alternatif, lorsque le courant est par exemple positif, le piston, soumis à l'interaction entre les champs magnétiques, subit une force électromagnétique qui l'entraîne en déplacement dans un sens provoquant une diminution du volume de la chambre d'aspiration. (Le sens de déplacement effectif du piston dépend du signe du courant et du sens de bobinage. Il est ici considéré par hypothèse que lorsque le courant est positif, la force électromagnétique est orientée de la chambre de refoulement vers la chambre d'aspiration). Ce déplacement du piston comprime donc l'organe de travail.

En outre, ce déplacement conduit à réduire le volume de la chambre d'aspiration et à augmenter le volume de la chambre de refoulement. L'augmentation du volume de la chambre de refoulement implique une diminution de la pression, ce qui conduit au déplacement du fluide de la chambre d'aspiration vers la chambre de refoulement.

Quand l'amplitude du courant devient négative, le piston est alors soumis à une force électromagnétique de sens opposé à la force électromagnétique correspondant à un courant positif. En outre, l'organe de travail participe au déplacement du piston en se détendant. Ce déplacement réduit le volume de la chambre de refoulement, en compressant l'organe de choc, et conduit donc à augmenter la pression du fluide dans la chambre de refoulement. Ainsi, le fluide est expulsé hors de la pompe par la sortie de fluide. En outre, ce déplacement, en augmentant le volume de la chambre d'aspiration, conduit à en diminuer la pression, ce qui entraîne l'aspiration de fluide dans la chambre d'aspiration par l'entrée de fluide. La pompe a ainsi effectué un cycle complet et peut entamer un nouveau cycle de pompage.

Au cours des phases d'aspiration et de refoulement, le piston est principalement soumis d'une part aux forces mécaniques résultant de la compression/détente des organes de travail et de choc, et d'autre part, à une force magnétique oscillante résultant de l'interaction des champs magnétiques créés par l'aimant permanent du piston et par le solénoïde alimenté en courant. Cette force magnétique oscillante dépend de la perméance mutuelle entre le piston aimanté et le solénoïde, du potentiel magnétique du solénoïde et du potentiel magnétique de l'aimant permanent du piston. Cette force magnétique change de sens comme le courant qui alimente le solénoïde.

Ainsi, par exemple, lors d'une partie de la phase de refoulement du fluide, la pompe selon l'invention est soumise à deux forces qui s'additionnent, à un déphasage près, pour refouler le fluide de l'entrée de fluide jusqu'à la sortie de fluide : la force d'interaction magnétique créée par le solénoïde et par l'aimant permanent, d'une part, et l'effort de détente de l'organe de travail, d'autre part.

Dans les pompes de l'état de la technique, le piston n'étant pas muni d'un aimant permanent, seule une alimentation en courant redressé est possible, et le refoulement de fluide résulte uniquement de l'effort de détente de l'organe élastique de travail. En particulier, dans la phase de refoulement, le courant est nul et donc le champ magnétique du solénoïde est également nul.

Une pompe selon l'invention permet donc d'atteindre de meilleures performances d'aspiration et de débit que les pompes de l'état de la technique car le refoulement et l'aspiration résultent de l'addition de deux forces : une produite par l'organe élastique et l'autre par une force électromagnétique oscillante.

Les organes élastiques de travail et de choc peuvent être de tous types. Ce sont par exemple des ressorts hélicoïdaux, des coussins en caoutchouc, des vérins, etc. Avantageusement et selon l'invention, lesdits organes de travail et de choc sont des ressorts.

Une pompe selon l'invention peut présenter ses entrée et sortie de fluide en tout point du corps tubulaire creux. Néanmoins, selon une variante avantageuse de l'invention, lesdites entrée et sortie de fluide sont ménagées respectivement à chacune des extrémités longitudinales dudit corps tubulaire creux.

Ainsi, les entrée et sortie de fluide sont dans l'axe du déplacement du piston, ce qui limite les pertes de charge et améliore la circulation de fluide au sein du corps tubulaire creux.

Avantageusement, une pompe selon l'invention comprend un dispositif anti-retour amont porté par le piston et ménagé au niveau d'une extrémité aval du piston définissant l'extrémité amont de la chambre de refoulement de fluide, et un dispositif anti-retour aval ménagé au niveau de la sortie de fluide.

Ces dispositifs anti-retour sont ménagés dans le corps tubulaire afin que le fluide puisse passer de la chambre d'aspiration à la chambre de refoulement en minimisant le phénomène de reflux, Lorsque le piston est déplacé dans une position dans laquelle la chambre d'aspiration voit son volume diminuer et la pression du fluide dans la chambre de refoulement diminuer, le dispositif anti-retour amont s'ouvre spontanément pour laisser passer le fluide de la chambre d'aspiration vers la chambre de refoulement. Lorsque le piston est déplacé dans une position dans laquelle la chambre de refoulement voit son volume diminuer et la pression du fluide de cette chambre augmenter, le dispositif anti-retour amont se ferme spontanément et le dispositif anti-retour aval s'ouvre spontanément.

Avantageusement, une pompe selon l'invention comprend au moins un carter magnétique de guidage des lignes de flux entourant le solénoïde.

L'invention concerne également une pompe caractérisée en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non-limitatif et qui se réfère aux figures annexées, dans lesquelles :
- la figure 1 est une vue schématique en coupe longitudinale d'une pompe selon un mode de réalisation de l'invention,
- la figure 2 est une vue schématique d'un cycle et demi de la variation du courant alimentant un solénoïde d'une pompe selon un mode de réalisation de l'invention,
- la figure 3 est une vue schématique en coupe longitudinale d'une pompe selon un autre mode de réalisation de l'invention,
- la figure 4 est une vue schématique de la force exercée sur le piston magnétique en fonction de sa position dans la chemise d'une pompe selon un mode de réalisation de l'invention,
- la figure 5 est une vue schématique d'une installation de climatisation comprenant une pompe selon un mode de réalisation de l'invention pour l'évacuation de condensats,
- les figures 6a, 6b et 6c sont des vues schématiques de l'évolution au cours du temps respectivement de la force magnétique, de la position du piston et de la force du ressort de travail d'une pompe de l'art antérieur,
- les figures 7a, 7b et 7c sont des vues schématiques de l'évolution au cours du temps respectivement de la force magnétique, de la position du piston et de la force du ressort de travail d'une pompe selon un mode de réalisation de l'invention.

### 6. Description détaillée d'un mode de réalisation de l'invention

Sur les figures, les échelles et les proportions ne sont pas strictement respectées et ce, à des fins d'illustration et de clarté.

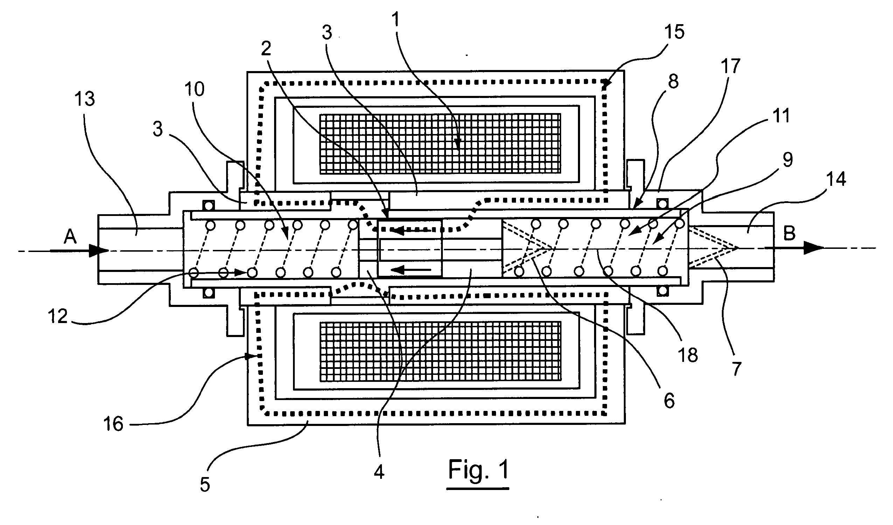

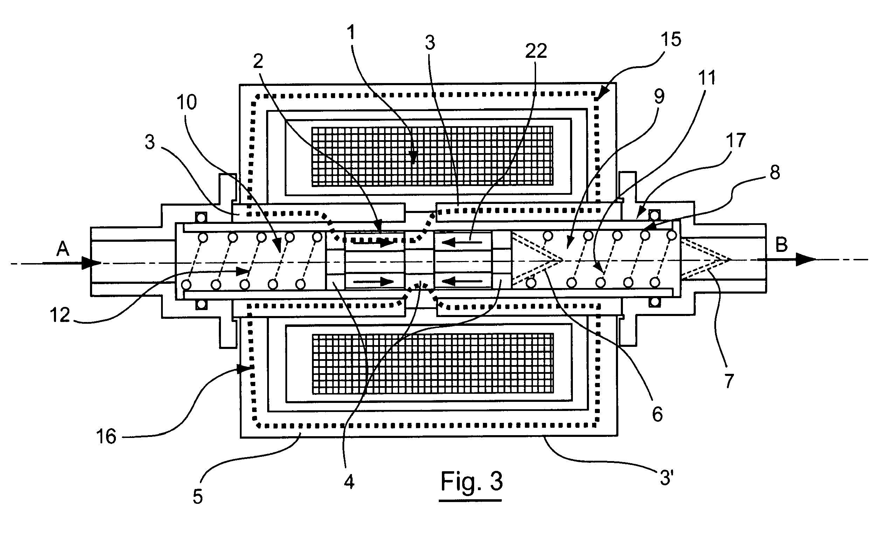

Dans toute la description détaillée qui suit en référence aux figures, les termes « amont » et « aval » sont utilisés en référence au sens d'écoulement du fluide dans la pompe, lorsque celle-ci est en fonctionnement. Sur les figures 1 et 3, le fluide entre dans la pompe par l'extrémité 13 suivant la direction de la flèche A et sort de la pompe par l'extrémité 14 selon la direction de la flèche B. Ainsi, l'extrémité 13 est une extrémité amont et l'extrémité 14 est une extrémité avale.

Une pompe selon l'invention comprend un corps 8 tubulaire creux s'étendant le long d'une direction 18 longitudinale. Ce corps 8 tubulaire creux peut-être de tous types. De préférence, ce corps 8 est cylindrique à base circulaire, avec un axe de symétrie coïncidant avec la direction 18 longitudinale.

Le corps 8 présente de part et d'autres : une entrée 13 de fluide dans le corps 8 tubulaire creux, une sortie 14 de fluide du corps 8 tubulaire creux.

Un piston 4, 2 est monté mobile longitudinalement à l'intérieur du corps 8. Le piston 4, 2 délimite avec l'entrée de fluide 13, une chambre 10 à volume variable d'aspiration de fluide, et avec la sortie de fluide 14, une chambre 9 à volume variable de refoulement de fluide. Ce piston 4, 2 présente un alésage longitudinal creux permettant le passage de fluide de la chambre 10 d'aspiration à la chambre 9 de refoulement.

La pompe comprend en outre une bobine formant un solénoïde 1 enroulée autour d'au moins une portion du corps 8 et adaptée pour être alimenté par un courant électrique générant un champ magnétique. Le solénoïde peut être de tous types. En particulier, son nombre de spires, le diamètre de chaque spire, et de manière générale toutes les caractéristiques du solénoïde, peuvent êtres déterminées en fonction du champ magnétique recherché. Ce solénoïde 1 est selon le mode de réalisation des figures lui-même entouré par une carcasse 5 magnétique pour canaliser et guider les lignes de champ générées par le solénoïde et l'aimant. De même, selon le mode de réalisation des figures, le corps 8 est également entouré de manchons magnétiques 3 et 3' formant une enveloppe magnétique et destinés à canaliser et guider ces lignes de flux. Ces manchons magnétiques 3 et 3' délimitent un entrefer permettant aux lignes de flux, crées par l'aimant, de passer soit autour du solénoïde 1, soit directement dans un des deux manchons 3 ou 3' .

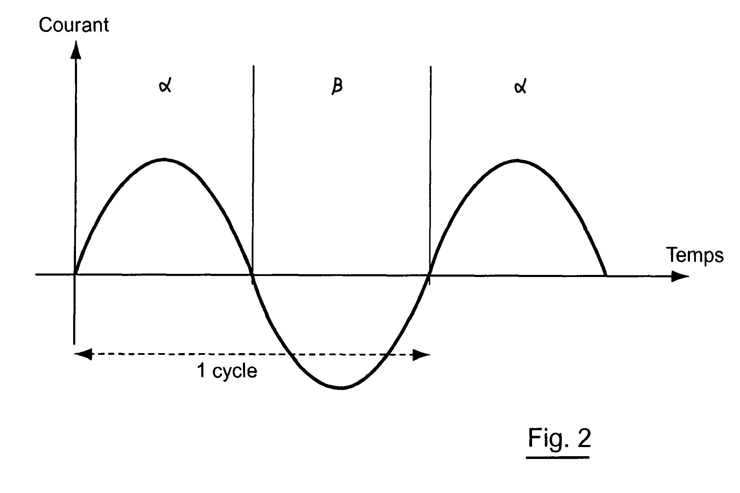

Selon le mode de réalisation des figures, le solénoïde est alimenté par un courant alternatif double alternance non redressé. La figure 2 montre par exemple sur un cycle et demi, une variation d'amplitude du courant alimentant le solénoïde d'une pompe selon un mode de réalisation.

Selon l'invention, le piston comprend au moins une portion magnétique, qui de préférence est une bague 4 magnétique, et au moins un aimant 2 permanent magnétisé longitudinalement, solidaire de la bague 4 magnétique.

La bague magnétique 4 dont est munie le piston conforme à l'invention permet d'obtenir un ajustement avec le corps 8 présentant des tolérances bien plus précises que celles qui pourraient être obtenues avec un aimant dépourvu de bague magnétique. En effet, l'aimant est usuellement obtenu par frittage, et la précision d'un matériau fritté ne peut généralement être inférieure à cinq centièmes de millimètre, alors qu'une bague magnétique réalisée en un matériau métallique massique peut aisément être usinée avec une précision de l'ordre du millième de millimètre. Améliorer la précision de l'ajustement du piston dans le corps tubulaire creux améliore l'étanchéité du piston et donc les performances hydrauliques de pression d'aspiration et de refoulement. Par ailleurs, cela améliore la robustesse de l'ensemble, car les frottements entre le corps tubulaire creux et le piston, lors du fonctionnement de la pompe, sont supportés par la bague magnétique et non par l'aimant, qui est plus fragile que la bague. Les performances générales et la durée de vie s'en trouveront ainsi accrues.

Selon le mode de réalisation de la figure 1, le piston comprend deux bagues 4 magnétiques agencées à chaque extrémité longitudinale de l'aimant 2 permanent magnétisé longitudinalement. L'aimant 2 permanent étant magnétisé longitudinalement, il génère en permanence un champ magnétique dont une ligne de flux est schématiquement représentée par la ligne 15 en pointillé.

Les bagues 4 magnétiques sont en un matériau magnétique, c'est-à-dire, par exemple en fer ferromagnétique. Ces bagues 4 magnétiques sont donc adaptées pour canaliser les lignes de flux crées par l'aimant. Ainsi, lorsque le solénoïde est alimenté par un courant électrique alternatif, ces bagues 4 se déplacent sous l'effet d'une force magnétique oscillante crée par l'interaction des champs magnétiques du solénoïde et de l'aimant. Une ligne du flux magnétique générée par le solénoïde est schématiquement représentée par la ligne 16 en pointillé.

Selon un mode préférentiel de réalisation de l'invention, la pompe comprend un ressort 12 de travail, ménagé dans la chambre 10 d'aspiration. Ce ressort est par exemple un ressort hélicoïdal. Ce ressort 12 de travail est adapté pour occuper une première position dans laquelle il est comprimé par le piston de sorte que la chambre 10 d'aspiration présente un premier volume, et une deuxième position dans laquelle il est détendue et repousse le piston de sorte que la chambre 10 d'aspiration présente un deuxième volume, supérieur audit premier volume.

Selon un mode de réalisation de l'invention, le déplacement du piston résulte du signe du courant. En particulier, et en référence à la figure 2, la phase α correspond à une phase dans laquelle le courant est positif et la force électromagnétique négative, si bien que le piston se déplace vers l'entrée de fluide en comprimant le ressort 12 de travail. La phase β correspond à une phase dans laquelle le courant est négatif et la force électromagnétique positive, si bien que le piston se déplace vers la sortie de fluide, avec le concours du ressort 12 du travail.

En outre, selon un mode de réalisation de l'invention, la pompe comprend également un ressort 11 de choc, ménagé dans la chambre 9 de refoulement. Ce ressort 11 de choc est adapté pour occuper une première position dans laquelle il est comprimé par le piston de sorte que la chambre 9 de refoulement présente un premier volume, et une deuxième position dans laquelle il est détendue et repousse le piston de sorte que la chambre 9 de refoulement présente un deuxième volume, supérieur audit premier volume.

Selon le mode de réalisation des figures, la pompe comprend un dispositif anti-retour 6 amont porté par le piston au niveau d'une extrémité aval du piston et un dispositif anti-retour 7 aval ménagé au niveau de la sortie de fluide. Ces dispositifs anti-retour 6, 7 de fluide sont par exemple des vannes anti-retour ou des clapets anti-retour ou tout équipements analogues. Le dispositif anti-retour 6 amont est par exemple porté directement par le piston au niveau de l'extrémité longitudinale du piston qui délimite la chambre 9 de refoulement. Le dispositif anti-retour 7 aval est par exemple porté par le corps 17 tubulaire à l'extrémité longitudinale avale de la chambre 9 de refoulement. Chacun de ces dispositifs anti-retour autorise le passage de fluide de l'amont vers l'aval en fonction des niveaux de pression dans les chambres d'aspiration et de refoulement et minimise le retour de fluide en sens inverse.

Selon le mode de réalisation des figures, le dispositif anti-retour 6 amont est porté par le piston au niveau de l'extrémité longitudinale du piston qui délimite la chambre 9 de refoulement de fluide et le dispositif anti-retour 7 aval est porté par le corps 17 au niveau de la sortie 14 de fluide.

Ainsi, lorsque le piston est déplacé vers l'entrée de fluide, la pression dans la chambre 11 de refoulement diminue, ce qui ouvre le dispositif anti-retour 6 amont de sorte que le fluide peut s'écouler de la chambre 10 d'aspiration vers la chambre 9 de refoulement. Lorsque le piston est déplacé vers la sortie de fluide, la pression dans la chambre 9 de refoulement augmente, ce qui ouvre le dispositif anti-retour 7 aval et ferme le dispositif anti-retour 6 amont de sorte que le fluide peut s'écouler de la chambre 9 de refoulement vers la sortie 14 de fluide.

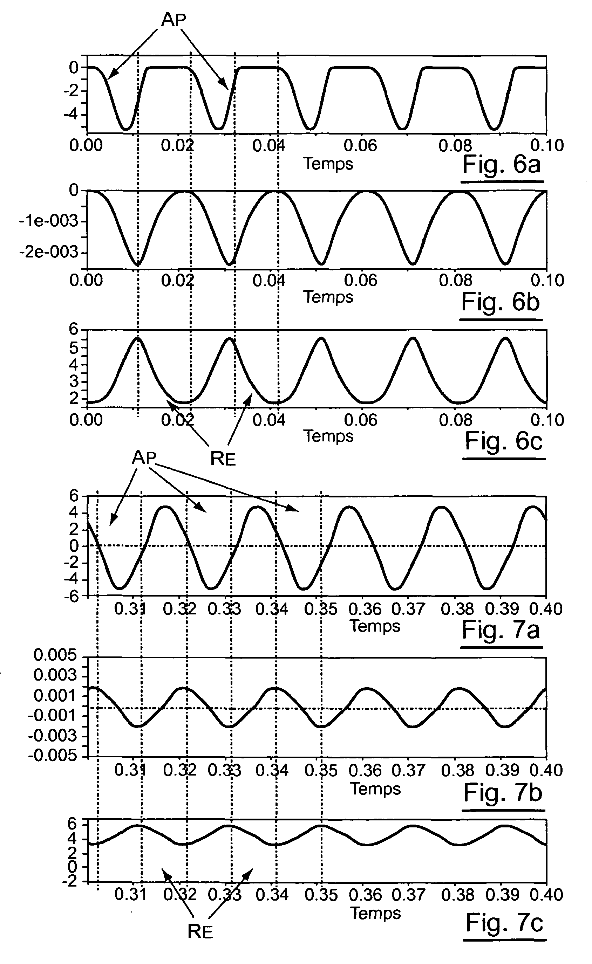

La figure 7a représente l'évolution au cours du temps de la force magnétique créée par le solénoïde et l'aimant dans une pompe selon le mode de réalisation des figures. Les phases d'aspiration sont schématiquement représentées par la référence AP. La figure 6a représente schématiquement, à titre de comparaison, l'évolution au cours du temps de la force magnétique dans une pompe de l'art antérieur ne comprenant pas d'aimant permanent et pas d'enveloppe magnétique définissant un entrefer.

La figure 7c représente l'évolution au cours du temps de la force du ressort de traction dans une pompe selon le mode de réalisation des figures. Les phases de refoulement sont schématiquement représentées par la référence RE. La figure 6c représente schématiquement, à titre de comparaison, l'évolution au cours du temps de la force du ressort de traction dans une pompe de l'art antérieur ne comprenant pas d'aimant permanent et pas d'enveloppe magnétique définissant l'entrefer.

La figure 7b représente l'évolution au cours du temps de la position du piston dans la chemise d'une pompe selon le mode de réalisation des figures. La figure 6b représente schématiquement, à titre de comparaison, l'évolution au cours du temps de la position d'un piston d'une pompe de l'art antérieur ne comprenant pas d'aimant permanent.

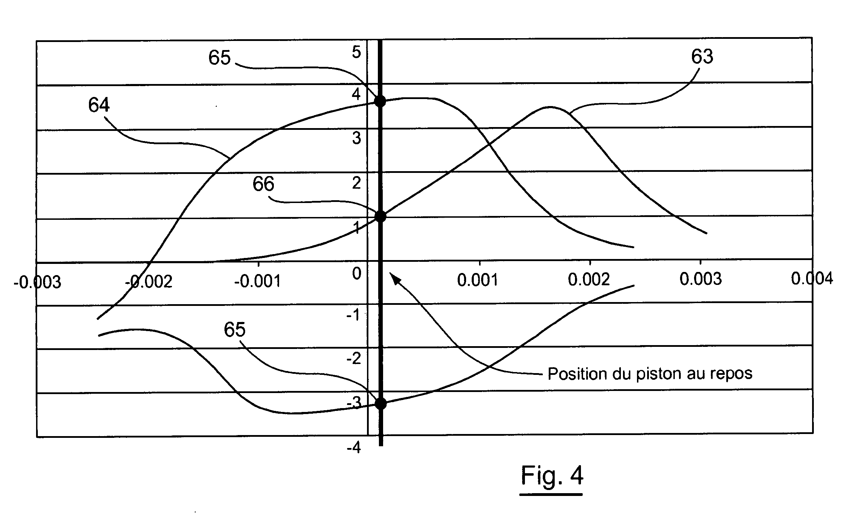

La figure 4 représente les évolutions de la force exercée sur le piston (axe des ordonnées) en fonction de la position du piston dans la chemise (axe des abscisses). La courbe 64 correspond à une pompe selon le mode de réalisation des figures. La courbe 63 correspond à une pompe selon une pompe de l'art antérieur.

Le point 65 correspond à la force exercée sur le piston lorsque ce dernier est dans une position de repos pour une pompe selon le mode de réalisation des figures. Le point 66 correspond, à titre de comparaison à la force exercée sur le piston, en position de repos, d'une pompe de l'art antérieur.

Ces différentes courbes révèlent que dans une pompe selon l'invention, au démarrage, l'effort exercé sur le piston au repos est de l'ordre de quatre fois supérieur, toute chose étant égale par ailleurs, à l'effort crée par une pompe électromagnétique à piston oscillant de l'art antérieur.

En outre, dans une pompe selon l'invention, le débit et l'aspiration sont de l'ordre de deux fois supérieurs à ceux d'une pompe électromagnétique à piston oscillant de l'art antérieur.

De plus, avec une pompe selon l'invention, il n'est pas nécessaire de caler précisément le piston par rapport à l'entrefer afin d'avoir des performances hydrauliques stables. Dès lors, il n'est pas nécessaire d'utiliser des pièces ayant des tolérances précises dans la direction longitudinale.

Par ailleurs, le fait que le piston comprenne au moins une bague magnétique permet d'obtenir un ajustement précis entre le piston et le corps tubulaire creux, ce qui contribue à améliorer les performances hydrauliques de la pompe et sa robustesse au cours du fonctionnement de la pompe.

Selon une variante avantageuse de l'invention et tel que représenté sur la figure 3, le piston comprend deux aimants 2, 22, permanents magnétisés longitudinalement et de sens opposés. Ces deux aimants 2, 22 sont séparés par une bague 4 magnétique de même matériau que les bagues 4 magnétiques formant les extrémités longitudinales du piston. Ces aimants 2, 22 sont aimantés de sorte que les lignes de champ traversant le piston soient longitudinales de sens opposés. Une pompe selon ce mode de réalisation permet ainsi, non seulement un fonctionnement de la pompe sur un courant alternatif, mais également d'améliorer les performances hydrauliques de la pompe, les allers-retours du piston bénéficiant de la contribution du champ magnétique des aimants et des ressorts de travail et de choc.

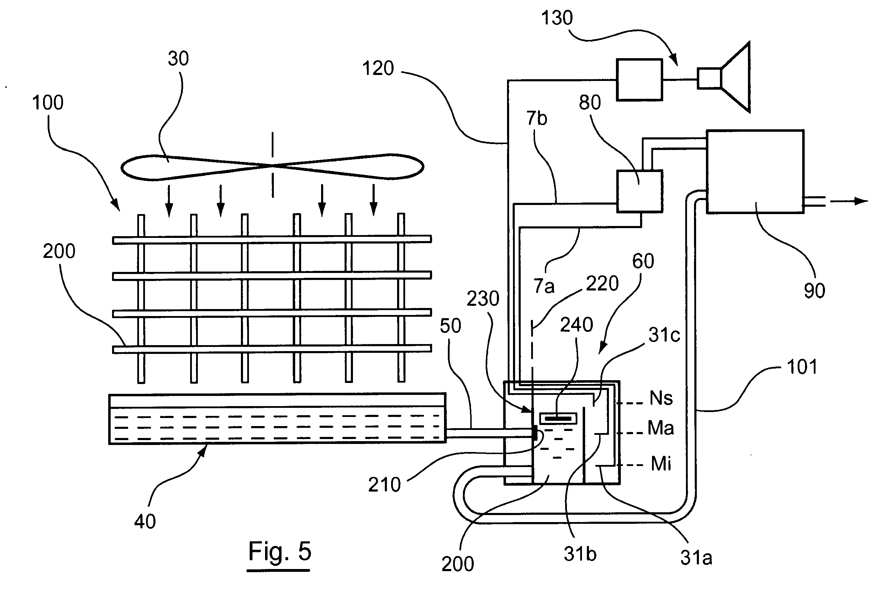

Une pompe selon l'invention peut être utilisée pour diverses applications. Une utilisation avantageuse de l'invention concerne le relevage de condensats d'une installation de climatisation. Sur la figure 5, une telle installation 100 comprend un échangeur 200 à l'intérieur duquel circule un fluide réfrigérant, un ventilateur 30 destiné à mettre l'air ambiant en mouvement pour l'amener au contact de l'échangeur 200 afin d'améliorer les échanges thermiques, et un bac de récupération des condensats 40 disposé sous l'échangeur. Lorsque l'air ambiant plus ou moins humide est refroidi au contact de l'échangeur 200, la vapeur d'eau contenue dans l'air se condense et des gouttelettes se forment sur les parois extérieures de l'échangeur. Ces gouttelettes tombent ensuite par gravité dans le bac de récupération 40.

Pour évacuer les condensats récupérés dans le bac 40, l'installation comprend avantageusement une pompe 90 selon l'invention pilotée, c'est-à-dire notamment mise en route et arrêtée, à l'aide d'un dispositif de détection de niveaux des condensats 60.

Ce dispositif de détection 60 comprend un réservoir 200 qui communique, d'une part avec le bac 40 par l'intermédiaire d'un conduit d'évacuation 50, et d'autre part avec la pompe 90, par l'intermédiaire d'un conduit d'aspiration 101. A l'intérieur du réservoir 200 se trouve un flotteur 230 libre de se déplacer verticalement en suivant le niveau des condensats dans le réservoir. Ce flotteur 230 renferme par ailleurs un aimant 240.

Trois interrupteurs à lames souples 31a, 31b et 31c, chacun scellé dans une ampoule et fixé à l'extérieur d'une paroi du réservoir 200, sont placés au voisinage du trajet de l'aimant. Ces interrupteurs de type « reed switch » sont susceptibles de se fermer sous l'effet du champ magnétique de l'aimant 240. Les interrupteurs 31a et 31b sont connectés par l'intermédiaire de deux circuits électriques 7a et 7b à la commande 80 de la pompe hydraulique 90. L'interrupteur 31c est connecté par l'intermédiaire d'un circuit électrique 120 à la commande d'un système d'alerte 130.

Une pompe selon l'invention permet ainsi d'améliorer les performances de relevage de condensats d'une telle installation de climatisation.

Cela étant, une pompe selon l'invention peut également être utilisée dans d'autres applications.

En outre, l'invention ne se limite pas au seul mode de réalisation décrit. Une pompe selon l'invention peut présenter une géométrie et une architecture différentes sans néanmoins porter atteinte aux améliorations apportées par la pompe décrite à titre d'exemple. Ainsi, dans les modes de réalisation décrits plus haut, une partie mobile formée par le piston remplit la fonction d'un rotor porteur d'un inducteur alors que la partie fixe de la pompe remplit la fonction d'un stator portant un induit. Il est cependant tout-à-fait envisageable de configurer une pompe conforme à l'invention de sorte que sa partie mobile forme l'induit et sa partie fixe forme l'inducteur.

## Revendications

1. Pompe électromagnétique comprenant :
- un corps tubulaire creux s'étendant le long d'une direction longitudinale,
- un piston monté mobile longitudinalement à l'intérieur du corps (8) tubulaire creux,
- un solénoïde (1) assemblé autour d'au moins une portion du corps (8) tubulaire creux,
**caractérisée en ce que** le piston comprend au moins un aimant (2) permanent et au moins une bague magnétique formant simultanément une portion magnétique du piston et un moyen de guidage du mouvement du piston dans le corps tubulaire creux,
et **en ce que** la pompe comprend au moins une enveloppe magnétique (3, 3') de guidage des lignes de flux créées par l'aimant agencée autour d'une partie dudit corps tubulaire creux et délimitant un entrefer.

2. Pompe selon la revendication 1, **caractérisée en ce que** l'aimant permanent est magnétisé longitudinalement.

3. Pompe selon la revendication 2, **caractérisée en ce que** ledit piston comprend au moins deux bagues magnétiques agencées de part et d'autre de l'aimant (2) permanent.

4. Pompe selon la revendication 2, **caractérisée en ce que** le piston comprend au moins deux aimants (2, 22) permanents magnétisés longitudinalement et de sens opposés.

5. Pompe selon la revendication 4, **caractérisée en ce que** les deux aimants (2, 22) sont séparés par une portion (4) magnétique.

6. Pompe selon la revendication 4, **caractérisée en ce que**, ladite portion magnétique étant constituée par une bague magnétique.

7. Pompe selon l'une des revendications 4 à 6, **caractérisée en ce que** le piston comprend deux bagues magnétiques agencées aux extrémités longitudinales du piston,

8. Pompe selon l'une des revendications 1 à 7, **caractérisée en ce qu'**elle comprend au moins un premier organe élastique, dit organe (12) de travail, ménagé dans une chambre (10) d'aspiration formée par un espace séparant le piston d'une entrée de fluide, et apte à être placé dans au moins une configuration de compression par le piston (4, 2) de sorte que la chambre (10) d'aspiration y présente un premier volume, et dans au moins une deuxième configuration dans laquelle il est détendu et maintient le piston en une position telle que la chambre (10) d'aspiration y présente un deuxième volume, supérieur audit premier volume.

9. Pompe selon la revendication 8, **caractérisée en ce qu'**elle comprend au moins un deuxième organe élastique, dit organe (11) de choc, ménagé dans une chambre (9) de refoulement formée par un espace séparant le piston d'une sortie de fluide, et apte à être placé dans au moins une première configuration de compression par le piston (4, 2) de sorte que la chambre (9) de refoulement y présente un premier volume, et dans au moins une deuxième configuration dans laquelle il est détendu et maintient le piston (4, 2) en une position telle que la chambre (9) de refoulement y présente un deuxième volume, supérieur audit premier volume.

10. Pompe selon la revendication 9, **caractérisé en ce que** lesdits organes (12) de travail et (11) de choc sont des ressorts.

11. Pompe selon les revendications 9 ou 10, **caractérisée en ce que** les dites entrée (13) et sortie (14) de fluide sont ménagées respectivement à chacune des extrémités longitudinales dudit corps (8) tubulaire creux.

12. Pompe selon l'une des revendications 9 à 11, **caractérisée en ce qu'**elle comprend un dispositif anti-retour (6) amont porté par ledit piston et un dispositif anti-retour (7) aval ménagé au niveau de la sortie (14) de fluide.

13. Pompe selon l'une des revendications 1 à 12, **caractérisée en ce qu'**elle comprend au moins un carter (5) magnétique de guidage de lignes de flux entourant le solénoïde (1).

## Claims

1. Electromagnetic pump comprising:
- a hollow tubular body which extends along a longitudinal direction;
- a piston which is fitted such as to be mobile longitudinally inside the hollow tubular body (8) ;
- a solenoid (1) which is assembled around at least one portion of the hollow tubular body (8),
**characterised in that** the piston comprises at least one permanent magnet (2) and at least one magnetic ring which simultaneously forms a magnetic portion of the piston, and a means for guiding the movement of the piston in the hollow tubular body; and **in that** the pump comprises at least one magnetic envelope (3, 3') for guiding of the flow lines created by the magnet which is arranged around part of the said hollow tubular body, and delimits an air gap.

2. Pump according to claim 1, **characterised in that** the permanent magnet is magnetised longitudinally.

3. Pump according to claim 2, **characterised in that** the said piston comprises at least two magnetic rings which are arranged on both sides of the permanent magnet (2).

4. Pump according to claim 2, **characterised in that** the piston comprises at least two permanent magnets (2, 22) which are magnetised longitudinally and in opposite directions.

5. Pump according to claim 4, **characterised in that** the two magnets (2, 22) are separated by a magnetic portion (4).

6. Pump according to claim 4, **characterised in that** the said magnetic portion is constituted by a magnetic ring.

7. Pump according to one of claims 4 to 6, **characterised in that** the piston comprises two magnetic rings which are arranged at the longitudinal ends of the piston.

8. Pump according to one of claims 1 to 7, **characterised in that** it comprises at least one first resilient unit, known as the work unit (12), provided in an inlet chamber (10) formed by a space which separates the piston from a fluid intake, and can be placed in at least one compression configuration by the piston (4, 2), such that the inlet chamber (10) has a first volume there, and in at least one second configuration in which it is relieved from pressure, and retains the piston in a position such that the inlet chamber (10) has a second volume there, which is larger than the said first volume.

9. Pump according to claim 8, **characterised in that** it comprises at least one second resilient unit, known as the impact unit (11), which is provided in a delivery chamber (9) formed by a space which separates the piston from a fluid outlet, and can be placed in at least one first compression configuration by the piston (4, 2), such that the delivery chamber (9) has a first volume there, and in at least one second configuration in which it is relieved from pressure, and retains the piston (4, 2) in a position such that the delivery chamber (9) has a second volume there, which is larger than the said first volume.

10. Pump according to claim 9, **characterised in that** the said work (12) and impact (11) units are springs.

11. Pump according to claims 9 or 10, **characterised in that** the said fluid intake (13) and outlet (14) are provided respectively at each of the longitudinal ends of the said hollow tubular body (8).

12. Pump according to one of claims 9 to 11, **characterised in that** it comprises an upstream non-return device (6) which is supported by the said piston, and a downstream non-return device (7) which is provided at the level of the fluid outlet (14).

13. Pump according to one of claims 1 to 12, **characterised in that** it comprises at least one magnetic housing (5) for guiding of flow lines which surround the solenoid (1).

## Patentansprüche

1. Elektromagnetische Pumpe, aufweisend:
- einen hohlen röhrenförmigen Körper, der sich entlang einer Längsrichtung erstreckt,
- einen Kolben, der in Längsrichtung beweglich im Inneren des hohlen röhrenförmigen Körpers (8) angebracht ist,
- eine Magnetspule (1), die um mindestens einen Abschnitt des hohlen röhrenförmigen Körpers (8) herum montiert ist,
**dadurch gekennzeichnet, dass** der Kolben mindestens einen Permanentmagneten (2) und mindestens einen Magnetring umfasst, die gleichzeitig einen magnetischen Abschnitt des Kolbens und ein Mittel zur Führung der Bewegung des Kolbens in dem hohlen röhrenförmigen Körper bilden,
und dadurch, dass die Pumpe mindestens einen magnetischen Mantel (3, 3') zur Führung der durch den Magneten erzeugten Flusslinien umfasst, der um einen Abschnitt des hohlen röhrenförmigen Körpers herum angeordnet ist und einen Spalt abgrenzt.

2. Pumpe nach Anspruch 1, **dadurch gekennzeichnet, dass** der Permanentmagnet in Längsrichtung magnetisiert ist.

3. Pumpe nach Anspruch 2, **dadurch gekennzeichnet, dass** der Kolben mindestens zwei Magnetringe umfasst, die auf beiden Seiten des Permanentmagneten (2) angeordnet sind.

4. Pumpe nach Anspruch 2, **dadurch gekennzeichnet, dass** der Kolben mindestens zwei Permanentmagnete (2, 22) umfasst, die in Längsrichtung und gegensinnig magnetisiert sind.

5. Pumpe nach Anspruch 4, **dadurch gekennzeichnet, dass** die zwei Magnete (2, 22) durch einen magnetischen Abschnitt (4) getrennt sind.

6. Pumpe nach Anspruch 4, **dadurch gekennzeichnet, dass** der magnetische Abschnitt aus einem Magnetring gebildet ist.

7. Pumpe nach einem der Ansprüche 4 bis 6, **dadurch gekennzeichnet, dass** der Kolben zwei Magnetringe umfasst, die an den Enden in Längsrichtung des Kolbens angeordnet sind.

8. Pumpe nach einem der Ansprüche 1 bis 7, **dadurch gekennzeichnet, dass** sie mindestens ein erstes elastisches, als Arbeitsorgan (12) bezeichnetes Organ umfasst, das in einer Pumpkammer (10) eingerichtet ist, die durch einen Raum gebildet ist, der den Kolben von einem Fluideintritt trennt, und geeignet ist, um in mindestens einer Verdichtungsanordnung des Kolbens (4, 2) derart angeordnet zu werden, dass die Pumpkammer (10) darin ein erstes Volumen aufweist, und in mindestens einer zweiten Anordnung angeordnet zu werden, in der es entspannt ist und den Kolben in einer derartigen Stellung hält, dass die Pumpkammer (10) darin ein zweites Volumen aufweist, das größer als das erste Volumen ist.

9. Pumpe nach Anspruch 8, **dadurch gekennzeichnet, dass** sie mindestens ein zweites elastisches, als Stoßorgan (11) bezeichnetes Organ umfasst, das in einer Druckkammer (9) angeordnet ist, die durch einen Raum gebildet ist, der den Kolben von einem Fluidaustritt trennt und geeignet ist, um in mindestens einer ersten Anordnung der Verdichtung durch den Kolben (4, 2) derart angeordnet werden, dass die Druckkammer (9) darin ein erstes Volumen aufweist, und in mindestens einer zweiten Anordnung angeordnet zu werden, in der es entspannt ist und den Kolben (4, 2) in einer derartigen Stellung hält, dass die Druckkammer (9) darin ein zweites Volumen aufweist, das größer als das erste Volumen ist.

10. Pumpe nach Anspruch 9, **dadurch gekennzeichnet, dass** die Arbeits- (12) und Stoßorgane (11) Federn sind.

11. Pumpe nach Anspruch 9 oder 10, **dadurch gekennzeichnet, dass** der Fluideintritt (13) und -austritt (14) jeweils an jedem der Enden in Längsrichtung des hohlen röhrenförmigen Körpers (8) eingerichtet sind.

12. Pumpe nach einem der Ansprüche 9 bis 11, **dadurch gekennzeichnet, dass** sie stromaufwärts eine Rücklaufsperre (6) aufweist, die durch den Kolben getragen wird, und stromabwärts eine Rücklaufsperre (7) aufweist, die auf Höhe des Fluidaustritts (14) eingerichtet ist.

13. Pumpe nach einem der Ansprüche 1 bis 12, **dadurch gekennzeichnet, dass** sie mindestens ein magnetisches Gehäuse (5) zur Führung der Flusslinien umfasst, das die Magnetspule (1) umgibt.
